Europäisches Patentamt

European Patent Office

Office européen des brevets

(11) Veröffentlichungsnummer: **0 192 105 B1**

(12) **EUROPÄISCHE PATENTSCHRIFT**

(45) Veröffentlichungstag der Patentschrift:
03.05.89

(51) Int. Cl.⁴: **B 21 D 26/02, C 04 B 35/64**

(21) Anmeldenummer: **86101314.2**

(22) Anmeldetag: **01.02.86**

(54) Verfahren zum Warmumformen mindestens eines Bleches aus einem schwer verformbaren Werkstoff.

(30) Priorität: **21.02.85 CH 795/85**

(43) Veröffentlichungstag der Anmeldung:
**27.08.86 Patentblatt 86/35**

(45) Bekanntmachung des Hinweises auf die Patenterteilung:
**03.05.89 Patentblatt 89/18**

(84) Benannte Vertragsstaaten:
**CH DE FR GB LI SE**

(56) Entgegenhaltungen:
**EP-A- 0 089 155**
**DE-A- 2 551 768**
**DE-A- 2 742 816**
**DE-C- 201 136**
**GB-A- 1 398 929**
**US-A- 2 728 317**
**US-A- 3 054 035**
**US-A- 3 928 901**

(73) Patentinhaber: **BBC Brown Boveri AG, Haselstrasse,
CH-5401 Baden (CH)**

(72) Erfinder: **Meyer, Gundolf, Dr., Sellesgrabeweg 10,
Ch-5413 Birmenstorf (CH)**
Erfinder: **Verpoort, Clemens, Dr., Bollstrasse 45,
Ch-5442 Fislisbach (CH)**

## Beschreibung

Die Erfindung geht aus von einem Verfahren zum Warmumformen mindestens eines Bleches aus einem schwer verformbaren Werkstoff nach der Gattung des Oberbegriffs des Anspruchs 1.

Die Umformtechnik metallischer Körper hat sich in neuerer Zeit zu einem industriell-wirtschaftlich bedeutenden Zweig der Fertigungstechnologie entwickelt (Vergl. z.B. K. Lange, Th. Neitzert, H. Westheidl, Möglichkeiten moderner Umformtechnik, Zeitschrift für industrielle Fertigung 73, Springer Verlag 1983, Seiten 349-358). Beim Umformen schwer verformbarer Werkstoffe, insbesondere beim Blechumformen müssen spezielle Umformbedingungen eingehalten werden. Dabei macht man öfters von der Eigenschaft gewisser Werkstoffe, unter speziellen Bedingungen ein superplastisches Verhalten zu zeigen, Gebrauch (Vergl. P. J. Winkler, W. Keinath, Superplastische Umformung, ein werkstoffsparendes und kostengünstiges Fertigungsverfahren für die Luft- und Raumfahrt, Metall, Heft 6, 34. Jahrgang 1980, Seite 519 ff). Bei schwer umformbaren, insbesondere bei Hochtemperaturwerkstoffen treten wegen den erforderlichen hohen Umformtemepraturen, der Oxydations- und Rissgefahr besonders grosse Schwierigkeiten auf. Dies gilt unter anderem für Superlegierungen, insbesondere für oxyddispersionsgehärtete Superlegierungen, für Molybdän, für keramische Platten usw.

Aus der Technologie ist ferner das heiss-isostatische Pressen bekannt. Es wird ganz allgemein in der Pulvermetallurgie, speziell für warmfeste Legierungen, mehr und mehr angewendet (vgl. G.H. Gessinger, Powder Metallurgy of Superalloys, Butterworths 1984, University Press Cambridge, speziell Kapitel 3.2.2 HIP, Seite 70 ff). Das heiss-isostatische Pressverfahren wird ausser zur Pulververdichtung bei der Herstellung kompakter Körper noch für eine Reihe weiterer Fertigungsprozesse mit gutem Erfolg eingesetzt. Darunter fällt unter anderem auch das Diffusionsfügen von Bauteilen durch heiss-isostatisches Pressen (vgl. Ch. Nissel, HIP Diffusion Bonding, Powder metallurgy international vol. 16, no. 3, 1984, p. 113 ff; W. Werdecker, F. Aldinger, Joining of refractory metals by HIP Technology, R + HM March 1982, Trends in Refractory Metals, Hard Metals and Special Materials and Their Technology», Vol. 2, 10th Plansee Seminar, Reutte, Austria, 1.-5. June 1981, page 161-193). Über das isostatische Pressen allgemein gibt es zahlreiche Veröffentlichungen (z.B. D. Ermel, Isostatisches Pressen und seine Anwendungsmöglichkeiten, Sprechsaal, Vol. 116, No. 3, 1983, Seiten 170-177).

In der EP-A-0 089 155 wird ein Verfahren zur Herstellung eines Verbundkörpers bestehend aus einem keramischen oder keramisch-metallischen Kern und einem metallischen Mantel beschrieben, wobei letzterer durch heiss-isostatisches Umpressen auf den Kern aufgebracht wird. Der Mantel wird im allgemeinen durch gewöhnliches Pressen aus Pulver vorgeformt. Das Ganze wird in eine weiche Blechkapsel gegeben, welche verschweisst und evakuiert und einem heiss-isostatischen Pressprozess unterworfen wird. Nach der Abkühlung wird die Kapsel entfernt.

Die herkömmlichen Blechumformtechniken mit Pressen, Gesenken und Matrizen versagen meistens bei sehr schwer verformbaren Werkstoffen oder es müssen mehrere Arbeitsgänge hintereinander geschaltet werden. Dies ist umso unwirtschaftlicher, je höher gleichzeitig die Umformtemperatur und je komplizierter die Form des Werkstücks ist.

Es besteht daher ein grosses Bedürfnis, die Blechumformung schwer verformbarer Werkstoffe zu verbessern und zu rationalisieren.

Der Erfindung liegt die Aufgabe zugrunde, ein Verfahren zur Warmumformung von Blechen aus einem schwer verformbaren Werkstoff, insbesondere aus einer oxyddispersionsgehärteten Superlegierung anzugeben, welches gestattet, vergleichsweise hohe Temperaturen anzuwenden und das für eine industrielle Gross- und Massenproduktion auch komplizierter Werkstückformen wirtschaftlich geeignet ist.

Diese Aufgabe wird durch die im Anspruch 1 angegebenen Merkmale gelöst.

Die Erfindung wird anhand der nachfolgenden, durch Figuren näher erläuterten Ausführungsbeispiele beschrieben.

Dabei zeigt:

Fig. 1 ein Fliessdiagramm des Verfahrens in Blockdarstellung,

Fig. 2 eine perspektivische Darstellung/Aufriss-Schnitt von Werkzeug und Werkstück vor dem Umformen,

Fig. 3 eine perspektivische Darstellung/Aufriss-Schnitt von Werkzeug und Werkstück nach dem Umformen,

Fig. 4 einen Aufriss-Schnitt (Querschnitt) durch eine andere Form von Werkzeug und Werkstück vor dem Umformen,

Fig. 5 einen Aufriss-Schnitt (Querschnitt) durch eine andere Form von Werkzeug und Werkstück nach dem Umformen,

Fig. 6 einen Aufriss-Schnitt (Querschnitt) durch ein Werkzeug und zu verbindende Werkstücke vor dem Umformen,

Fig. 7 einen Seitenriss/Längsschnitt eines Werkzeugs und zu verbindender Werkstücke vor dem Umformen,

Fig. 8 einen Aufriss-Schnitt (Querschnitt) durch ein Werkzeug und verbundene Werkstücke nach dem Umformen.

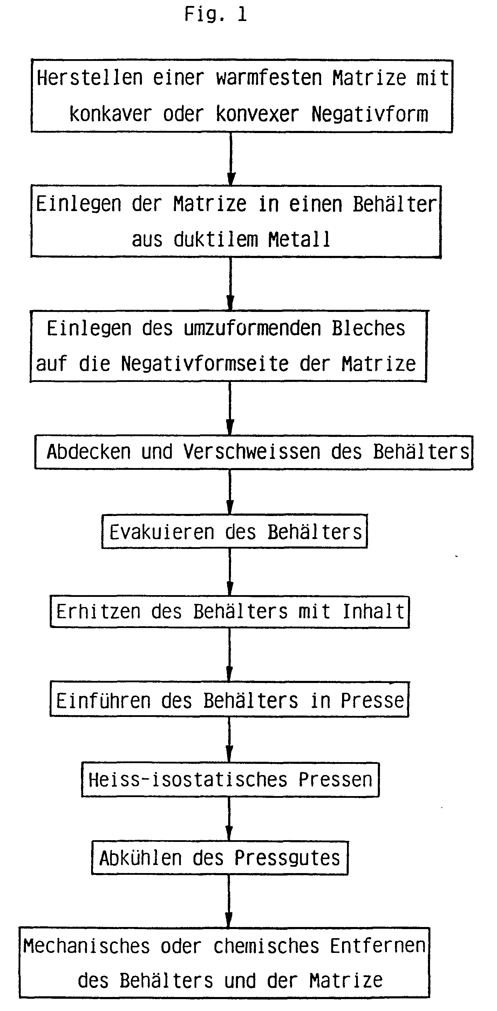

Fig. 1 bezieht sich auf ein Fliessdiagramm des Verfahrens zum Warmumformen eines Werkstücks in Blockdarstellung. Die Figur bedarf keiner weiteren Erläuterung.

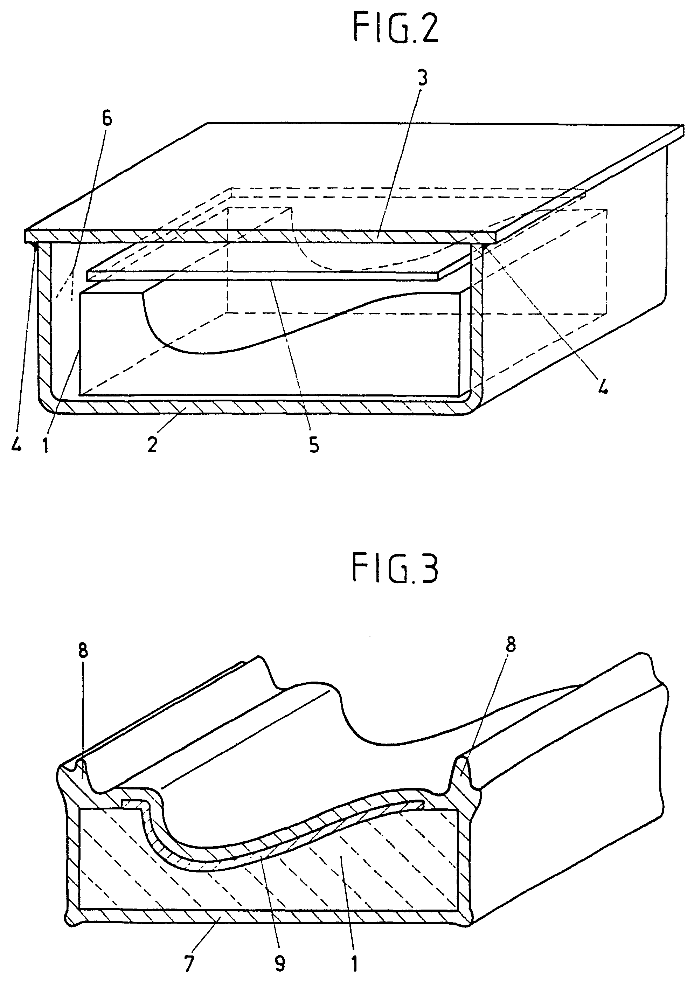

In Fig. 2 ist ein Werkzeug sowie ein Werkstück vor dem Umformen zum Teil in Perspektive, zum Teil als Aufriss-Schnitt dargestellt. 1 ist eine im unteren Teil prismatische, im oberen Teil als konkave Negativform ausgebildet Matrize für das umzuformende Werkstück. Die Matrize 1 kann aus einem metallischen oder keramischen Hochtemperaturwerkstoff bestehen. 2 ist ein Behälter im Ausgangszustand (vor der Umformung), der aus einem duktilen metallischen Material besteht, dessen Schmelzpunkt hoch genug liegt, um bei der Umformtemperatur nicht anzuschmelzen. Im vorliegenden Fall besteht der Behälter 2 vorzugsweise aus einem weichen Kohlenstoffstahl. Ein Deckel 3 schliesst über eine Schweissnaht 4 den Behälter 3 hermetisch und vakuumdicht ab. Behälter 2, Deckel 3 und Schweissnaht 4 sind auf der vorderen Frontseite geschnitten (als Aufriss-Schnitt) dargestellt. 5 ist das auf die Seite der Negativform der Matrize 1 zu legende, umzuformende Blech (Werkstück vor der Umformung), im vorliegenden Fall als ebenes Blech angeliefert. Der Behälter 2 wird nach dem Verschweissen des Deckels 3 evakuiert und endgültig verschweisst. Das Vakuum ist durch das Bezugszeichen 6 angedeutet.

Fig. 3 zeigt das Werkzeug und das Werkstück der Fig. 1 nach dem Umformen zum Teil in Perspektive, zum Teil (Frontseite) als Aufriss-Schnitt. 1 ist die unveränderte Form der Matrize, 7 der verformte Behälter mit seinen Wülsten 8 (Materialanhäufung durch Staucheffekte) nach dem heissisostatischen Pressen. Das umgeformte Blech 9 (Werkstück nach der Umformung) schmiegt sich vollständig den Konturen der Negativform der Matrize 1 an.

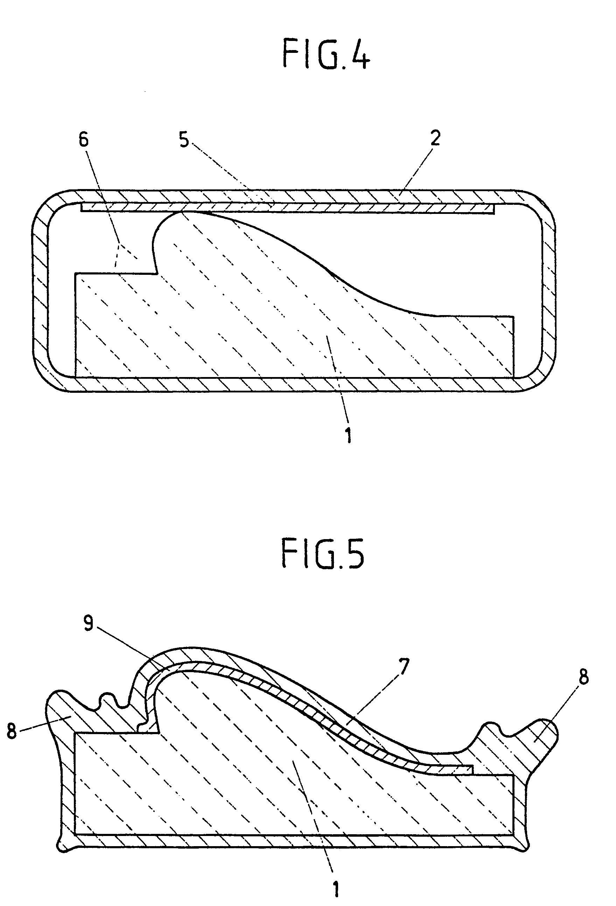

In Fig. 4 ist ein Aufriss-Schnitt (Querschnitt) durch eine andere Form von Werkzeug und Werkstück vor dem Umformen dargestellt. 1 ist die im oberen Teil mit einer konvexen Negativform für das Werkstück versehene Matrize. Der Behälter 2 besteht hier im Wesentlichen aus einem Rohr von rechteckigem Querschnitt, das an den Stirnseiten (nicht gezeichnet!) gequetscht und verschweisst oder durch verschweisste Deckel vakuumdicht abgeschlossen sein kann. Die übrigen Bezugszeichen entsprechen denjenigen der Fig. 2.

Fig. 5 zeigt einen Aufriss-Schnitt (Querschnitt) durch eine Form von Werkzeug und Werkstück gemäss Fig. 4 jedoch nach dem Umformen. Die Bezugszeichen entsprechen denjenigen der Fig. 3.

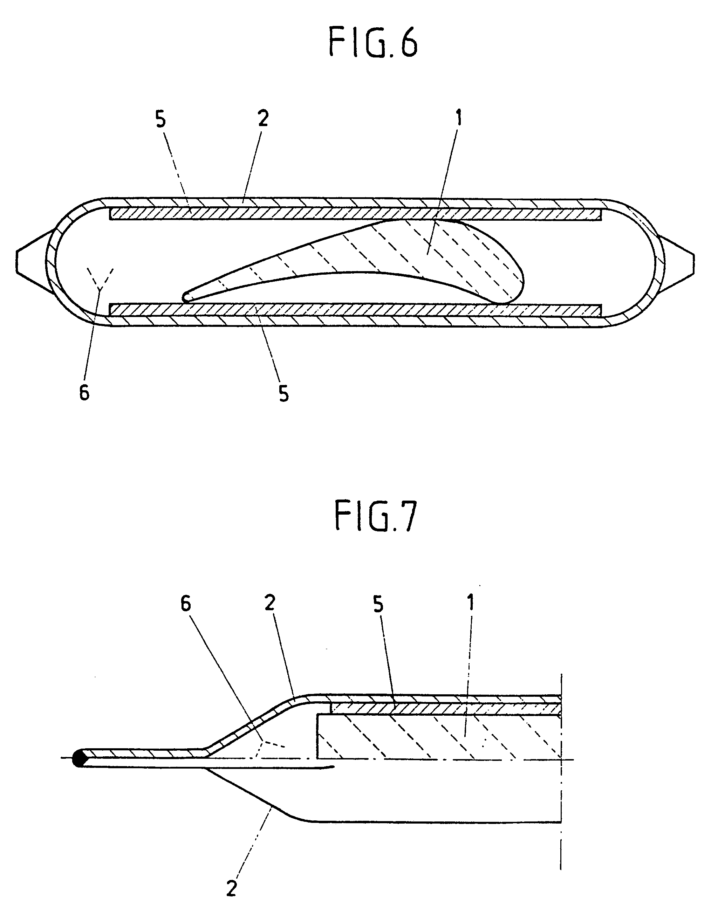

In Fig. 6 ist ein Aufriss-Schnitt (Querschnitt) durch ein Werkzeug und durch die zu verbindenden Werkstücke, vor dem Umformen dargestellt. Die Matrize 1 hat hier die Form eines vollständigen Schaufelprofils und wirkt sozusagen als Kern. Der Behälter 2 besteht aus einem flachgedrückten, an den Stirnseiten gequetschten und verschweissten Rohr. Als Werkstücke werden die beiden umzuformenden und in einer anschliessenden Phase in gleicher Hitze durch Diffusionsfügen zu verbindenden Bleche 5 eingelegt. Das Vakuum ist durch das Bezugszeichen 6 angedeutet.

Fig. 7 zeigt einen Seitenriss/Längsschnitt eines Werkzeugs und zu verbindender Werkstücke vor dem Umformen. Es ist nur die Hälfte der zur Mittellinie symmetrischen Körper dargestellt. Die untere Hälfte zeigt den Blechkörper in Ansicht, die obere Hälfte die verschiedenen Körper im Schnitt. Der als flaches Rohr ausgebildete Behälter 2 ist an seinen Stirnseiten flachgequetscht und durch eine Schweissnaht abgeschlossen. Alle Bezugszeichen entsprechen denjenigen der Fig. 6.

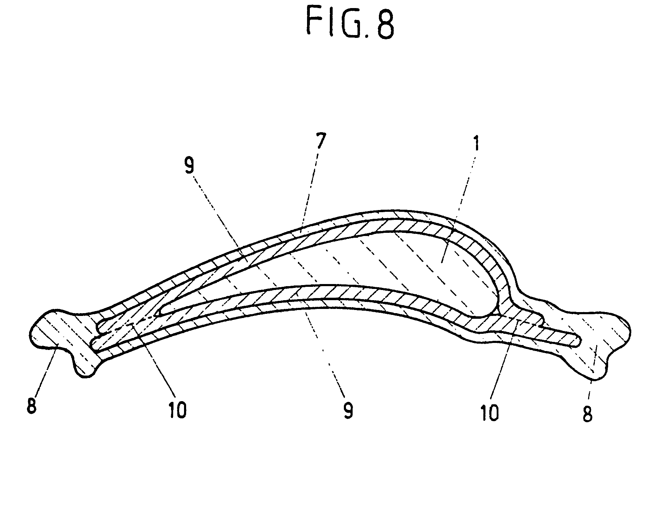

Fig. 8 bezieht sich auf einen Aufriss-Schnitt (Querschnitt) durch das Werkzeug und die verbundenen Werkstücke gemäss Fig. 6, jedoch nach dem Umformen. Durch das heiss-isostatische Pressen legten sich die umgeformten Bleche 9 an die Konturen der als Kern wirkenden Matrize 1 an und umhüllten sie vollständig. In der gleichen Hitze wurden durch Diffusionsfügen die Enden der Bleche 9 fest miteinander verbunden. Die später kristallographisch nicht mehr erkennbaren virtuellen Fügeflächen 10 sind durch gestrichelte Linien angedeutet. Das aufgestauchte Material des Behälters 7 bildet nach dem heiss-isostatischen Pressen die Wülste 8. Der Längsschnitt der Körper nach dem Umformen bleibt im wesentlichen unverändert und entspricht ungefähr der Fig. 7, weshalb er nicht nochmals dargestellt wurde.

*Ausführungsbeispiel I:*

Siehe Figuren 2 und 3:

Aus einem warmfesten grobkörnigen Blech 5 aus einer oxyd-dispersionsgehärteten Nickelbasis-Superlegierung wurde eine der konvexen Schaufelseite entsprechende Schaufelhalbschale durch Warmumformen hergestellt. Der Werkstoff mit dem Handelsnamen MA 6000 (International Nickel Co.) hatte die nachfolgende Zusammensetzung:

| | | | |
|------|---|------|---------|
| Ni | ≈ | 69 | Gew.-% |
| Cr | = | 15 | Gew.-% |
| W | = | 4,0 | Gew.-% |
| Mo | = | 2,0 | Gew.-% |
| Al | = | 4,5 | Gew.-% |
| Ti | = | 2,5 | Gew.-% |
| Ta | = | 2,0 | Gew.-% |
| C | = | 0,05 | Gew.-% |
| B | = | 0,01 | Gew.-% |
| Zr | = | 0,15 | Gew.-% |
| $Y_2O_3$ | = | 1,1 | Gew.-% |

Die Abmessungen des in der Längsrichtung gestreckte Stengelkristalle aufweisenden Bleches 5 waren folgende:

| | | | |
|--------|---|-----|-----|
| Länge | = | 280 | mm |
| Breite | = | 110 | mm |
| Dicke | = | 2,5 | mm |

Eine die Negativform des einseitigen Schaufelprofils als konkave Fläche enthaltende Matrize 1 wurde aus einem warmfesten keramischen Material hergestellt. Aus niedriggekohltem, weichen Stahl mit weniger als 0,1 % C-Gehalt wurde ein Behälter 2 von 2 mm Wandstärke gefertigt. Das umzuformende Blech 5, die Matrize 1 und die Innenseite des Behälters 2 wurden nun mit einem Anti-Benetzungsmittel/rennmittel beschichtet. Im vorliegenden Fall wurde $Al_2O_3$ durch Plasmaspritzen auf die Oberflächen aufgebracht. Die Matrize 1 wurde nun in den Behälter 2 gegeben, das umzuformende Blech 5 flach daraufgelegt und das Ganze mit einem Deckel 3 aus dem gleichen Kohlenstoffstahl wie der Behälter 2 abgedeckt. Dann wurde der Deckel 3 ringsum mit dem Behälter 2 durch eine vakuumdichte Schweissnaht 4 verbunden, evakuiert und der freigebliebene Durchlass für das Absaugen der Luft endgültig durch Elektronenstrahlschweissen verschlossen.

Das Ganze wurde hierauf auf eine Presstemperatur, welche oberhalb der Rekristallisationstemperatur der Superlegierung lag — im vorliegenden Fall auf 1275°C — erhitzt, in eine Presse eingeführt und während 2 h unter einem Druck von 150 MPa durch heiss-isostatisches Pressen umgeformt (Bezugszeichen 9, Fig. 3). Nach dem Umformen hatte das Blech 9 die Form einer Schaufelhalbschale mit folgenden Innenmassen:

Breite = 75 mm
Tiefe = 15 mm

Nach dem Umformen wurde der Behälter 7 auf mechanische Weise durch Auftrennen der Schweissnähte, Umbiegen und Abziehen der Behälterwandungen und Wegschleifen der Überreste entfernt. Dabei kann die Matrize 1 im allgemeinen weiter verwendet werden.

*Ausführungsbeispiel II:*

Siehe Figuren 6, 7 und 8:

Aus zwei warmfesten grobkörnigen Blechen 5 aus einer oxyddispersionsgehärteten Nickelbasis-Superlegierung wurde die hohle Schaufel durch Warmumformen und Diffusionsfügen in einer Hitze hergestellt. Der Werkstoff mit der Handelsbezeichnung MA 754 (International Nickel Co.) hatte die nachfolgende Zusammensetzung:

Ni ≈ 78 Gew.-%
Cr = 20 Gew.-%
C = 0,05 Gew.-%
Al = 0,3 Gew.-%
Ti = 0,5 Gew.-%
Fe = 1,0 Gew.-%
$Y_2O_3$ = 1,0 Gew.-%

Die Abmessungen der in der Längsrichtung gestreckte Stengelkristalle aufweisenden Bleche 5 waren je folgende:

Länge = 300 mm
Breite = 150 mm
Dicke = 2,8 mm

Die die innere Negativform darstellende Matrize 1 war als Kern mit Schaufelprofil (Breite = 80 mm; Tiefe = 20 mm) ausgebildet und bestand aus einer warmfesten Hochtemperaturlegierung. Der Behälter 2 wurde aus einem kreisrunden Rohr aus einem korrosionsbeständigen Chromnickelstahl (18% Cr; 8% Ni) von 129 mm Aussendurchmesser und 2 mm Wandstärke gefertigt. Das kreisrunde Rohr wurde zu einem Flachrohr mit abgerundeten Schmalseiten (Breite = 186 mm; Dicke = 30 mm) zusammengedrückt. Die Bleche 5, die Matrize 1 und die Innenseite des Behälters 2 wurden mit einem Trennmittel, welches kolloidalen Graphit in Wasser enthielt, beschichtet. Hierauf wurden die Bleche 5 und die Matrize 1 axial in den Behälter 2 eingeschoben und letzterer an seinen Stirnseiten flachgequetscht, verschweisst, evakuiert und endgültig verschlossen (Vakuum 6).

Der Behälter 2 samt Inhalt wurde in einer Presse auf eine Temperatur von 1340°C gebracht und bei dieser Temperatur unter einem Druck von 200 MPa während 3 h heiss-isostatisch umgeformt. Dabei legten sich die Enden der Bleche 9 aufeinander und wurden in der letzten Phase dieser thermomechanischen Behandlung in den Fügeflächen 10 durch Diffusion und lokale Verformung fest verschweisst. Nach dem vollständigen Umformen und Diffusionsfügen hatte die Innenfläche des Werkstücks die Form und die Abmessungen der Matrize 1 angenommen (Innenmasse):

Breite = 80 mm
Tiefe = 20 mm

Der Behälter 7 wurde durch Abtrennen der die Wülste 8 tragenden Ränder der Schmalseiten, Umbiegen und Loslösen der Behälterwandungen und Wegarbeiten der Reste entfernt. Die Matrize 1 wurde zum Teil auf mechanische, zum Teil auf chemische Weise aus dem Hohlkörper entfernt.

Die Erfindung ist nicht auf die Ausführungsbeispiele beschränkt. Es können auch andere als die in den Beispielen angegebenen Werkstoffe nach diesem Verfahren umgeformt und/oder gefügt werden. Dies bezieht sich grundsätzlich auf ausscheidungs- und/oder dispersionsgehärtete Legierungen auf Ni-, Co- oder Fe-Basis. Ferner können vorzugsweise Bleche oder Platten aus Mo oder W oder deren Legierungen mit oder ohne Dispersoide verarbeitet werden. Das Verfahren eignet sich ausserdem für das Umformen von Platten aus keramischem Material (Sialone).

Die Umform- und/oder Fügetemperaturen beim heiss-isostatischen Pressen sollen im Bereich zwischen 5°C über der Rekristallisations- und 5°C unter der Solidustemperatur liegen. Für einen Werkstoff gemäss Beispiel I bedeutet dies zwischen 1265°C und 1290°C, für einen solchen gemäss Beispiel II zwischen 1320°C und 1395°C. Der Druck soll dabei in den Bereich zwischen 100 und 200 MPa fallen. Die totale Umform- bzw. Fügezeit beträgt vorzugsweise 1 bis 3 h.

Als Behälterwerkstoff eignet sich ein bei der Umformtemperatur duktiles, jedoch noch genügend festes nicht warmrissempfindliches Material, dessen Schmelzpunkt genügend hoch über der Umformtemperatur liegt, um unter allen Umständen während des ganzen heiss-isostatischen Pressvorgangs dicht zu bleiben. Vorzugsweise kann dafür ein weicher, niedriggekohlter unlegierter oder legierter (z.B. rostfreier) Stahl genommen werden. Anti-Benetzungs/ Trenn/Schmiermittel sind vorzugsweise kolloidaler Graphit in Wasser, $Al_2O_3$ oder handelsübliche Mittel, meist auf MgO-Basis.

Als Matrizenwerkstoff kommen Hochtemperaturlegierungen, insbesondere Nickel- oder Kobaltbasislegierungen und keramische Materialien, insbesondere solche, die mit Alkalien ausgelaugt werden können, in Frage.

Die Vorteile des neuen Verfahrens bestehen in der Kostensenkung, insbesondere bei beschränkten Stückzahlen, der Möglichkeit der Formgebung komplizierter Werkstücke in einem einzigen Arbeitsgang, der Verwendung von bereits grobkörnig rekristallisiertem Ausgangsmaterial mit optimaler Gefügeausbildung (Stengelkristalle) für den Hochtemperaturbetrieb und somit Wegfall umständlicher zusätzlicher Grobkornglühoperationen.

**Patentansprüche**

1. Verfahren zum Warmumformen mindestens eines Bleches (5) aus einem schwer verformbaren Werkstoff unter Verwendung mindestens einer als Negativform dienenden Matrize (1), wonach zunächst mindestens eine Matrize (1) aus einem warmfesten Material hergestellt, mindestens mit einem umzuformenden Blech (5) abgedeckt und das Ganze in einen Behälter (2) eingelegt und unter Vakuum (6) dicht zugeschweisst wird, und der auf diese Weise hergestellte Körper unter allseitigem äusseren Druck bei erhöhter Temperatur einem heiss-isostatischen Pressprozess unterworfen wird, wobei mindestens ein Blech (5) durch mindestens eine der Behälterwände (2) an die Kontur der Matrize (1) gedrückt wird und nach dem Pressprozess das Ganze abgekühlt und der verformte Behälter (7) sowie die Matrize (1) auf chemischem und/oder mechanischem Wege entfernt wird.

2. Verfahren nach Anspruch 1, dadurch gekennzeichnet, dass die Matrize (1) als ein einen Kern bildender Körper ausgeführt wird und dass gleichzeitig 2 oder mehrere Bleche (5) auf verschiedenen Seiten der Matrize (1) zusammen mit derselben in den Behälter (2) eingelegt und gleichzeitig durch heiss-isostatisches Pressen zu Bauteilen umgeformt werden.

3. Verfahren nach Anspruch 2, dadurch gekennzeichnet, dass gleichzeitig oder zeitlich kurz hintereinander in einer Hitze mehrere Bleche (5) durch heiss-isostatisches Pressen umgeformt und wenigstens teilweise miteinander durch Diffusionsfügen verbunden werden, dergestalt, dass ein monolithisches Werkstück gefertigt wird.

4. Verfahren nach Anspruch 1 oder 2, dadurch gekennzeichnet, dass die Temperatur beim heiss-isostatischen Pressen mindestens 5°C über der Rekristallisationstemperatur und mindestens 5°C unter der Solidustemperatur des umzuformenden Werkstoffes eingestellt wird und dass der Druck zwischen 100 und 200 MPa und die totale Umformzeit zwischen 1 h und 3 h beträgt.

5. Verfahren nach Anspruch 3, dadurch gekennzeichnet, dass die Temperatur beim heiss-isostatischen Pressen und/oder Diffusionsfügen mindestens 5°C über der Rekristallisationstemperatur und mindestens 5°C unter der Solidustemperatur des umzuformenden Werkstoffes eingestellt wird und dass der Druck zwischen 100 und 200 MPa und die totale Umform- und/oder Fügezeit zwischen 1 h und 3 h beträgt.

6. Verfahren nach Anspruch 4, dadurch gekennzeichnet, dass der umzuformende Werkstoff eine dispersionsgehärtete Nickelbasis-Superlegierung der nachfolgenden Zusammensetzung ist:

| | | | |
|---|---|---|---|
| Ni | $\approx$ | 69 | Gew.-% |
| Cr | = | 15 | Gew.-% |
| W | = | 4,0 | Gew.-% |
| Mo | = | 2,0 | Gew.-% |
| Al | = | 4,5 | Gew.-% |
| Ti | = | 2,5 | Gew.-% |
| Ta | = | 2,0 | Gew.-% |
| C | = | 0,05 | Gew.-% |
| B | = | 0,01 | Gew.-% |
| Zr | = | 0,15 | Gew.-% |
| $Y_2O_3$ | = | 1,1 | Gew.-% |

und dass das heiss-isostatische Pressen in einem Temperaturbereich zwischen 1265°C und 1290°C durchgeführt wird.

7. Verfahren nach Anspruch 4, dadurch gekennzeichnet, dass der umzuformende Werkstoff eine dispersionsgehärtete Nickelbasis-Superlegierung der nachfolgenden Zusammensetzung ist:

| | | | |
|---|---|---|---|
| Ni | $\approx$ | 78 | Gew.-% |
| Cr | = | 20 | Gew.-% |
| C | = | 0,05 | Gew.-% |
| Al | = | 0,3 | Gew.-% |
| Ti | = | 0,5 | Gew.-% |
| Fe | = | 1,0 | Gew.-% |
| $Y_2O_3$ | = | 1,0 | Gew.-% |

und dass das heiss-isostatische Pressen in einem Temperaturbereich zwischen 1320°C und 1395°C durchgeführt wird.

8. Verfahren nach Anspruch 1 oder 2, dadurch gekennzeichnet, dass der umzuformende Werkstoff Molybdän oder eine Molybdänlegierung, Wolfram oder eine Wolframlegierung je mit oder ohne Dispersoide ist.

9. Verfahren nach Anspruch 1 oder 2, dadurch gekennzeichnet, dass der umzuformende Werkstoff ein keramisches Material ist.

**Claims**

1. A process for the hot forming of at least one sheet (5) made of a material that is difficult to work, using hat least one mold (1) serving as negative form, according to which initially at least one mold (1) is made of a re-fractory material, covered at least with one sheet (5) that is to be formed and the whole is placed in a container (2) and tightly welded together under vacuum (6), and the body produced in this way is subjected to a hot-isostatic press process under external pressure from all sides at elevated temperature, at least one sheet (5) being pressed through at least one of the container walls (2) against the contour of the mold (1), and the whole is cooled after the press process and the formed container (7) as well as the mold (1) are removed by chemical means.

2. The process as claimed in claim 1, wherein the mold (1) is made as a body forming a core and two or more sheets (5) on different sides of the mold (1) are placed at the same time together with the mold into the container (2) and formed simultaneously to make components by hot-isostatic pressing.

3. The process as claimed in claim 2, wherein several sheets (5) are formed simultaneously or in rapid succession in one heat by hot-isostatic pressing and joined together at least in part by diffusion-bonding, such that a monolithic workpiece is produced.

4. The process as claimed in claim 1 or 2, wherein the temperature is set during hot-isostatic pressing at least 5°C above the recrystallization temperature and at least 5°C below the solidus temperature of the material to be formed and the pressure is between 100 and 200 MPa and the total forming time is between 1 hour and 3 hours.

5. The process as claimed in claim 3, wherein the temperature is set during hot-isostatic pressing and/or diffusion-bonding at least 5°C above the recrystallization temperature and at least 5°C below the solidus temperature of the material to be formed and the pressure is between 100 and 200 MPa and the total forming and/or bonding time is between 1 hour and 3 hours.

6. The process as claimed in claim 4, wherein the material to be formed is a dispersion-hardened nickel base superalloy with the following composition:

| | | | |
|----|---|------|-----------|
| Ni | ≈ | 69 | % by weight |
| Cr | = | 15 | % by weight |
| W | = | 4.0 | % by weight |
| Mo | = | 2.0 | % by weight |
| Al | = | 4.5 | % by weight |
| Ti | = | 2.5 | % by weight |
| Ta | = | 2.0 | % by weight |
| C | = | 0.05 | % by weight |
| B | = | 0.01 | % by weight |
| Zr | = | 0.15 | % by weight |
| $Y_2O_3$ | = | 1.1 | % by weight |

and the hot-isostatic pressing is performed in a temperature range between 1265°C and 1290°C.

7. The process as claimed in claim 4, wherein the material to be formed is a dispersion-hardened nickel base superalloy with the following composition:

| | | | |
|----|---|------|-----------|
| Ni | ≈ | 78 | % by weight |
| Cr | = | 20 | % by weight |
| C | = | 0.05 | % by weight |
| Al | = | 0.3 | % by weight |
| Ti | = | 0.5 | % by weight |
| Fe | = | 1.0 | % by weight |
| $Y_2O_3$ | = | 1.0 | % by weight |

and the hot-isostatic pressing is performed in a temperature range between 1320°C and 1395°C.

8. The process as claimed in claim 1 or 2, wherein the material to be formed is a molybdenum or a molybdenum alloy, tungsten or a tungsten alloy in each case with or without dispersoids.

9. The process as claimed in claim 1 or 2, wherein the material to be formed is a ceramic material.

## Revendications

1. Procédé de formage à chaud d'au moins une tôle (5) en un matériau difficilement déformable avec utilisation d'au moins une matrice (1) servant de forme négative, selon lequel d'abord au moins une matrice (1) est fabriquée en un matériau réfractaire, est au moins couverte d'une tôle (5) à déformer et l'ensemble est introduit dans un récipient (2) et est fermé hermétiquement sous vide (6) par soudage, et où le corps ainsi réalisé est soumis à un processus de pressage isostatique à chaud sous une pression extérieure agissant de tous les côtés et à température élevée, dans lequel au moins une tôle (5) est pressée sur le contour de la matrice (1) à travers au moins une des parois du récipient (2) et où, après l'opération de pressage, l'ensemble est refroidi et le récipient déformé (7) ainsi que la matrice (1) sont enlevés par voie chimique et/ou mécanique.

2. Procédé suivant la revendication 1, caractérisé en ce que la matrice (1) est réalisée sous la forme d'un corps formant un noyau et en ce qu'en même temps, deux ou plus de deux tôles (5) disposées sur différents côtés de la matrice (1) sont introduites avec celle-ci dans le récipient (2) et sont déformées simultanément en éléments de construction par pressage isostatique à chaud.

3. Procédé suivant la revendication 2, caractérisé en ce que, simultanément ou à de courts intervalles de temps, dans une chaude, plusieurs tôles (5) sont déformées par pressage isostatique à chaud et unies au moins partiellement l'une à l'autre par assemblage par diffusion, de telle sorte que l'on fabrique une pièce monolithique.

4. Procédé suivant la revendication 1 ou 2, caractérisé en ce que la température lors du pressage isostatique à chaud est réglée à un niveau situé au moins 5°C au-dessus de la température de recristallisation at au moins 5°C en dessous de la température de solidus du matériau à déformer, en ce que la pression est comprise entre 100 et 200 MPa et en ce que la durée totale du formage est comprise entre 1 h et 3 h.

5. Procédé suivant la revendication 3, caractérisé en ce que la température lors du pressage isostatique et/ou de l'assemblage par diffusion est reglée à un niveau situé au moins 5°C au-dessus de la température de recristallisation et au moins 5°C en dessous de la température de solidus du matériau à déformer, en ce que la pression est comprise entre 100 et 200 MPa et en ce que la durée totale du formage et/ou de l'assemblage par diffusion est comprise entre 1 h et 3 h.

6. Procédé suivant la revendication 4, caractérisé en ce que le matériau à déformer est un superalliage à base de nickel durci par dispersion ayant la composition suivante en poids:

| | | | |
|----|---|------|---|
| Ni | ≈ | 69 | % |
| Cr | = | 15 | % |
| W | = | 4,0 | % |
| Mo | = | 2,0 | % |
| Al | = | 4,5 | % |
| Ti | = | 2,5 | % |
| Ta | = | 2,0 | % |
| C | = | 0,05 | % |
| B | = | 0,01 | % |
| Zr | = | 0,15 | % |
| $Y_2O_3$ | = | 1,1 | % |

et en ce que le pressage isostatique à chaud est exécuté dans un domaine de température compris entre 1265°C et 1290°C.

7. Procédé suivant la revendication 4, caractérisé en ce que le matériau à déformer est un superalliage à base de nickel durci par dispersion ayant la composition suivante en poids:

Ni    ≈    78  %
Cr    =    20  %
C     = 0,05  %
Al    =   0,3  %
Ti    =   0,5  %
Fe    =   1,0  %
$Y_2O_3$    =   1,0  %

et en ce que pressage isostatique à chaud est exécuté dans un domaine de température compris entre 1320°C et 1395°C.

8. Procédé suivant la revendication 1 ou 2, caractérisé en ce que le matériau à déformer est le molybdène ou un alliage de molybdène, le tungstène ou un alliage de tungstène, avec ou sans dispersoïdes.

9. Procédé suivant la revendication 1 ou 2, caractérisé en ce que le matériau à déformer est un matériau céramique.

Fig. 1

Herstellen einer warmfesten Matrize mit konkaver oder konvexer Negativform

Einlegen der Matrize in einen Behälter aus duktilem Metall

Einlegen des umzuformenden Bleches auf die Negativformseite der Matrize

Abdecken und Verschweissen des Behälters

Evakuieren des Behälters

Erhitzen des Behälters mit Inhalt

Einführen des Behälters in Presse

Heiss-isostatisches Pressen

Abkühlen des Pressgutes

Mechanisches oder chemisches Entfernen des Behälters und der Matrize

## FIG.2

## FIG.3

# FIG.4

# FIG.5

# FIG.6

# FIG.7

15

# FIG.8